# EUROPÄISCHE PATENTSCHRIFT

(11) **EP 3 961 161 B1**
(45) Veröffentlichungstag und Bekanntmachung des Hinweises auf die Patenterteilung: **28.09.2022**
(21) Anmeldenummer: 21000230.9
(22) Anmeldetag: 13.08.2021
(51) Int. Cl.: G01D 11/24

(54) **SENSORGEHÄUSE**
SENSOR HOUSING
BOITE DE SENSEUR

(30) Priorität: 26.08.2020 DE 102020005217
(43) Veröffentlichungstag der Anmeldung: 02.03.2022
(73) Patentinhaber: Pepperl+Fuchs SE, 68307 Mannheim (DE)
(72) Erfinder: Berg, Eckhard, 67269 Grünstadt (DE)
(74) Vertreter: Koch Müller Patentanwaltsgesellschaft mbH

(56) Entgegenhaltungen:
- DE-A1- 10 333 035
- DE-A1-102010 033 962
- DE-A1-102012 019 041

## Beschreibung

Die Erfindung betrifft ein Sensorgehäuse umfassend ein Kopfteil mit einem Sensorraum zur Aufnahme eines Sensors und ein an das Kopfteil angrenzendes Anschlussteil mit einem Klemmraum und einem in dem Klemmraum angeordneten Klemmanschlussblock.

Eine typische Bauform von Sensoren, wie induktiven oder kapazitiven Näherungssensoren, umfasst ein zweiteiliges Gehäuse. Der Sensor ist in einem Kopfteil angeordnet und in einem Anschlussteil wird eine Kontaktiervorrichtung, z.B. ein Klemmanschlussblock, zum Anschließen eines von außen kommenden Kabels angeordnet. Das Anschlussteil bzw. der von dem Anschlussteil umfasste Raum wird daher häufig auch als Klemmraum bezeichnet.

Der Sensor in dem Kopfteil ist durch elektrische Leitungen mit der Kontaktiervorrichtung verbunden, wofür das Kopfteil und das Anschlussteil entsprechende Durchgangsöffnungen umfassen.

Das Anschlussteil des induktiven Näherungssensors NBB20-U1-UU oder des kapazitiven Sensors CJ15+U1+A2 der Fa. Pepperl + Fuchs AG ist beispielsweise zweiteilig aus einem Deckel und einem Unterteil zusammengesetzt, wobei der Deckel mit dem Kopfteil verbunden ist, elektrische Leitungen von einem Sensor in dem Kopfteil in den Deckel geführt werden und in elektrischer Wirkverbindung mit in dem Deckel angeordneten Kontaktstiften stehen. Der Klemmanschlussblock ist in dem Unterteil angeordnet und weist einerseits Buchsen für die Kontaktstifte und andererseits Klemmen für von außen kommende Leitungen auf. Aus der DE 10 2012 019041 A1, der DE 10 2010 033962 A1 und der DE 103 33 035 A1 sind unterschiedliche Gehäuseformen bekannt.

Auch die Standardbauform der Baureihe IQ40 der Fa. SICK AG, z.B. der induktive Näherungssensor IQ40-NPPKKOS weist einen ähnlichen Aufbau auf.

Nachteilig ist, dass Kontaktstifte, insbesondere mehrere Kontaktstifte, die Richtung, aus der Deckel und Unterteil sich zusammenfügen lassen, sehr einschränken. Außerdem muss zwischen der Zuverlässigkeit der Kontaktierung und der Leichtgängigkeit der Verbindung von Deckel und Unterteil abgewogen werden. Je passgenauer und länger die Kontaktstifte sind, umso schwergängiger ist das Trennen oder Verbinden von Deckel und Unterteil.

Vor diesem Hintergrund besteht die Aufgabe der Erfindung darin, eine Vorrichtung anzugeben, die den Stand der Technik weiterbildet.

Insbesondere soll ein Sensorgehäuse mit einem einfachen, intuitiv zugänglichen und werkzeuglos bedienbaren Mechanismus für die Verbindung zwischen dem Deckel und Unterteil des Anschlussteils bereitgestellt werden.

Die Aufgabe wird durch eine Vorrichtung mit den Merkmalen des Patentanspruchs 1 gelöst. Vorteilhafte Ausgestaltungen der Erfindung sind Gegenstand von Unteransprüchen.

Gemäß dem Gegenstand der Erfindung wird ein Sensorgehäuse bereitgestellt, umfassend ein Kopfteil mit einem Sensorraum zur Aufnahme eines Sensors, ein an das Kopfteil angrenzendes Anschlussteil mit einem Klemmraum und einem in dem Klemmraum angeordneten Klemmanschlussblock, wobei das Kopfteil in einer an das Anschlussteil angrenzenden Rückwand eine Durchgangsöffnung zur Durchführung elektrischer Verbindungen, z.B. Kabel oder Stifte in den Sensorraum aufweist.

Das Anschlussteil ist mittels eines Verbindungsmittels mit dem Kopfteil verbunden.

Außerdem weist das Anschlussteil eine an die Rückwand des Kopfteils angrenzende erste Seitenwand mit einer mit der Durchgangsöffnung des Kopfteils zumindest überlappenden Durchgangsöffnung zur Durchführung elektrischer Verbindungen, z.B. Kabel oder Stifte von dem Sensorraum in den Klemmraum auf.

Des Weiteren weist das Anschlussteil eine zweite Seitenwand mit einer Eingangsöffnung zur Durchführung elektrischer Verbindungen, z.B. Kabel oder Stifte in den Klemmraum auf.

Der Klemmanschlussblock weist einen aus einem elektrisch isolierenden Material bestehenden Grundkörper mit mehreren Seitenflächen auf.

Der Grundkörper weist eine erste Seitenfläche mit mindestens zwei zueinander beabstandeten Klemmanschlüssen auf.

Jeder Klemmanschluss weist eine in den Grundkörper hineinreichende Öffnung zur Aufnahme eines Endes einer elektrischen Leitung, eine Federklemme, einen Abnehmer und ein Betätigungsmittel für die Federklemme auf.

Der Klemmanschlussblock weist wenigstens zwei Anschlusskontakte auf, wobei jeder der beiden Anschlusskontakte jeweils mit einem der Abnehmer in einer elektrischer Wirkverbindung steht.

Die beiden Anschlusskontakte sind entlang einer zweiten Seitenfläche des Grundkörpers zueinander beabstandet abgeordnet.

Jeder der wenigstens beiden Anschlusskontakte weist in dem ersten Abstand oberhalb der zweiten Seitenfläche eine Kontaktfläche aus einem elektrisch leitfähigen Material auf, wobei der erste Abstand der Kontaktfläche durch eine elastische Verformung der Kontaktfeder verringerbar ist.

Es versteht sich auch, dass die Federklemme, z.B. eine Federkraftklemme, eine kraftschlüssige Verbindung eines Endes einer Leitung oder elektrischen Verbindung mit dem Klemmanschlussblock herstellt.

Die kraftschlüssige Verbindung wird entweder durch Einführen des Leitungsendes in die entsprechende Öffnung des Klemmanschlusses allein oder durch zusätzliches Bedienen des Betätigungsmittels hergestellt und wird durch ein Bedienen des Betätigungsmittels wieder gelöst.

Bevorzugt ist das Bedienen des Betätigungsmittels werkzeuglos möglich. Das Betätigungsmittel umfasst bevorzugt eine Drucktaste. Es sei angemerkt, dass in einer Weiterbildung genau drei oder genau vier oder mehr gleichartige Anschlusskontakte ausgebildet sind.

Es versteht sich auch, dass der Abnehmer mit der Federklemme identisch sein kann bzw. die Federklemme Teil des Abnehmers sein kann. Alternativ ist der Abnehmer als eigenständiges Bauteil, z.B. eine elektrisch leitfähige Anschlagfläche für die Federklemme, ausbildet.

Die Elastizität der Anschlusskontakte wird insbesondere durch die Form und die Materialeigenschaften der Anschlusskontakte erreicht. Es versteht sich, dass die Anschlusskontakte sowie der Abnehmer vollständig oder teilweise aus einem elektrisch leitfähigen Material bestehen können.

Die Anordnung und die Elastizität der Anschlusskontakte ermöglichen ein einfaches und zuverlässiges Kontaktieren, insbesondere ohne die Bewegungsrichtung zum Herstellen eines elektrischen Kontakts zwischen den Anschlusskontakten und einem Gegenstück besonders einzuschränken und mit einer hohen Justagetoleranz.

Insbesondere bei einer zweiteiligen Ausführung des Anschlussteils ist diese Bewegungsfreiheit und Justagetoleranz von großem Vorteil.

Typischerweise wird ein Kontakt zwischen dem Klemmanschlussblock und einem mit dem Sensor in elektrischer Wirkverbindung stehendem Anschlussteil erst erst durch das Zusammenfügen der beiden Teile des zweiteiligen Anschlussteils erreicht, wobei mittels des erfindungsgemäßen Klemmanschlussblocks die Bewegungsrichtung für das Zusammenfügen nicht weiter eingeschränkt wird.

Gemäß einer ersten Ausführungsform sind die Öffnungen der Klemmanschlüsse jeweils in Richtung der Eingangsöffnung in der zweiten Seitenwand des Anschlussteils ausgerichtet.

In einer Weiterbildung sind die Anschlusskontakte vorzugsweise in Richtung der Durchgangsöffnung in der ersten Seitenwand des Anschlussteils ausgerichtet. In einer alternativen Ausführungsform sind die Anschlusskontakte in Fügerichtung der beiden Teile des Anschlussteils ausgerichtet.

In einer anderen Weiterbildung sind die Anschlusskontakte als Federkontakte jeweils um einen ersten Abstand über die zweite Seitenfläche aus dem Grundkörper hinausragend angeordnet.

In einer Ausführungsform weist die Öffnung jedes Klemmanschlusses zu der Eingangsöffnung in der zweiten Seitenwand des Anschlussteils einen Abstand auf. Vorzugsweise weicht jeder Abstand von einem aus allen Abständen gebildeten Mittelwert um höchstens 20% des Mittelwerts oder um höchstens 10% des Mittelwerts ab.

Gemäß einer Weiterbildung weist das Sensorgehäuse eine in dem Klemmraum angeordnete Haltevorrichtung zur Aufnahme des Klemmanschlussblocks auf.

In einer anderen Ausführungsform ist die zweite Seitenfläche des Grundkörpers plan ausgebildet, wodurch eine besonders große Freiheit hinsichtlich einer Kontaktierungsrichtung ermöglicht wird.

In einer anderen Weiterbildung umfasst das Anschlussteil ein Klemmraumunterteil und einen Klemmraumdeckel, wobei das Klemmraumunterteil und der Klemmraumdeckel in einer Schließrichtung zusammengesetzt sind.

Das Klemmraumunterteil umfasst die zweite Seitenwand mit der Eingangsöffnung.

Außerdem umfasst der Klemmraumdeckel die erste Seitenwand mit der Durchgangsöffnung und ist mittels des Verbindungsmittels mit dem Kopfteil verbunden.

Es sei angemerkt, dass eine zweiteilige Ausgestaltung des Anschlussteils üblich ist, um einen Zugang zu dem Klemmraum zu ermöglichen und gegebenenfalls die Ausrichtung des Kopfes relativ zu dem Anschlussteil ändern zu können.

Hierbei ist der Klemmanschlussblock typischerweise in dem die Eingangsöffnung umfassenden Klemmraumunterteil angeordnet, wobei von außen durch die Eingangsöffnung in den Klemmraum geführte elektrische Leitungen an die Klemmanschlüsse des Klemmanschlussblocks anschließbar sind.

Durch das Schließen des Anschlussteils, also dem Aufsetzen des Klemmraumdeckels auf das Klemmraumunterteil, stellt der erfindungsgemäße Klemmanschlussblock eine elektrische Wirkverbindung zwischen den von außen kommenden Leitungen und dem Sensor her, indem die Kontaktfedern mit entsprechenden, in dem Klemmraumdeckel angeordneten Abnehmern in Kontakt gebracht werden.

In einer anderen Weiterbildung entspricht das Sensorgehäuse dem IP 68 Standard oder dem IP 69K Standard.

In einer Ausführungsform weist jeder der beiden Klemmanschlüsse ein Betätigungsmittel für die Federklemme auf. Mittels des Betätigungsmittels lassen sich die jeweiligen Enden der-Leitung leicht aus den jeweiligen Anschlussteilen leicht lösen. Insbesondere wenn eine Anschlussverkabelung geändert werden muss, ist die leicht lösbare Verbindung von großem Vorteil.

In einer Weiterbildung wird ein induktiver oder kapazitiver Näherungssensor bereitgestellt, wobei der Näherungssensor ein Sensorgehäuse der vorbeschriebenen Art aufweist.

In einer Weiterbildung ist im dem Kopfteil wenigstens ein Sensorbauelement angeordnet. Vorzugsweise umfasst das Sensorbauelement einen induktiven und / oder kapazitiven und oder optischen und oder einen Ultraschallsensor. Vorzugsweise besteht das Sensorbauelement aus einen induktiven und / oder kapazitiven und oder optischen und oder einen Ultraschallsensor.

Die Erfindung wird nachfolgend unter Bezugnahme auf die Zeichnungen näher erläutert. Hierbei werden gleichartige Teile mit identischen Bezeichnungen beschriftet. Die dargestellten Ausführungsformen sind stark schematisiert, d.h. die Abstände und die lateralen und die vertikalen Erstreckung Ist nicht maßstäblich und weisen, sofern nicht anders angegeben, auch keine ableitbaren geometrischen Relationen zueinander auf. Darin zeigen, die
- Figur 1: einen Querschnitt einer ersten erfindungsgemäßen Ausführungsform eines Sensorgehäuses mit Klemmanschlussblock,
- Figur 2: eine Ansicht eines Klemmanschlussblockes gemäß einer ersten erfindungsgemäßen Ausführungsform,
- Figur 3: eine perspektivische Ansicht eines Klemmanschlussblocks gemäß einer zweiten erfindungsgemäßen Ausführungsform.

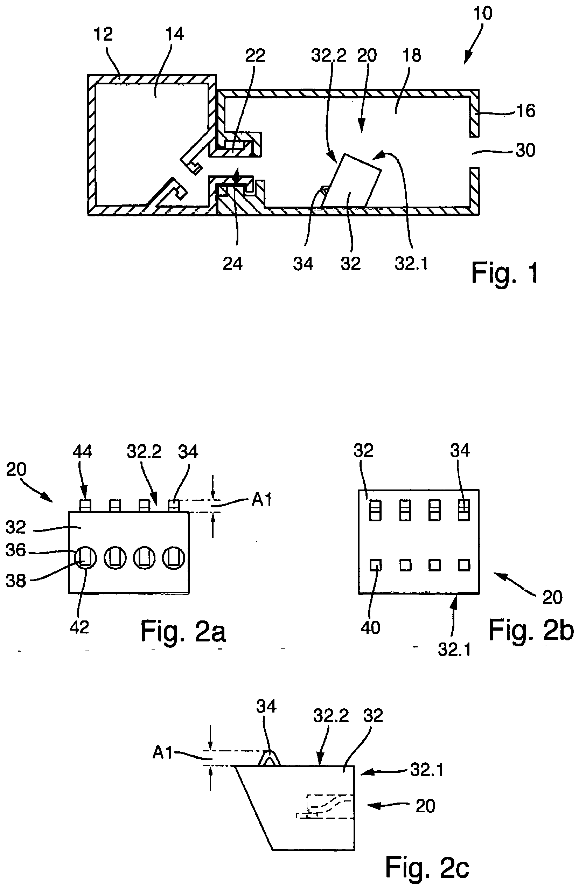

Die Abbildung der Figur 1 zeigt einen Querschnitt eines Sensorgehäuses 10 gemäß einer ersten Ausführungsform, umfassend ein Kopfteil 12 (schraffiert) mit einem Sensorraum 14 zur Aufnahme eines-Sensors (nicht dargestellt) und ein Anschlussteil 16 mit einem Klemmraum 18 und einem Klemmanschlussblock 20.

Das Kopfteil ist mittels eines Verbindungsteils 22 mit dem Anschlussteil 16 verbunden, wobei das Verbindungsteil 22 durch eine Durchgangsöffnung in einer ersten Seitenwand des Anschlussteils 16 in das Anschlussteil 16 hineinragt. Das Verbindungsteil 22 weist eine Durchgangsöffnung 24 zur Durchführung elektrischer Verbindungen, z.B. Kabel oder Stifte zwischen dem Sensorraum 14 und dem Klemmraum 18 auf. Außerdem weist das Anschlussteil 16 in einer zweiten Seitenwand eine Eingangsöffnung 30 zur Kabeldurchführung von außen in den Klemmraum 18 auf.

Der Klemmanschlussblock 20 ist auf einem Boden des Klemmraums angeordnet, wobei eine erste Seitenfläche 32.1 eines Grundkörpers 32 zu der Eingangsöffnung 30 hin ausgerichtet ist und eine zweite Seitenfläche 32.2 des Grundkörpers 32 zu der Durchgangöffnung 24 des Kopfteils 12 hin ausgerichtet ist. Der Klemmanschlussblock weist mindestens zwei Klemmanschlüsse und zu jedem Klemmanschluss einen über die zweite Seitenfläche 32.2 hinausragenden Anschlusskontakt 34 auf. Es versteht sich, dass in einer nicht dargestellten Ausführungsform der Anschlusskontakt 34 nicht über die zweite Seitenfläche 32.2 hinausragt.

In der Abbildung der Figur 2 ist eine erste erfindungsgemäße Ausführungsform des Klemmanschlussblocks 20 aus verschiedenen Richtungen dargestellt. Abbildungsteil (a) der Figur 2 zeigt eine Aufsicht auf die erste Seitenfläche 32.1 eines Anschlussblocks 20 mit vier Klemmanschlüssen, Abbildungsteil (b) eine Aufsicht auf die zweite Seitenfläche 32.2 und Abbildungsteil (c) eine seitliche Ansicht.

Jeder Klemmanschluss umfasst jeweils eine senkrecht zu der ersten Seitenfläche 32.1 verlaufende Öffnung 36, eine an einem unteren Ende der Öffnung 36 angeordnete Federklemme 38 und eine im Ausführungsbeispiel auf der zweiten Seite 32.2 des Grundkörpers 32 angeordnetes Betätigungsmittel 40, wobei-das Betätigungsmittel 40 jeweils nicht über die zweite Seitenfläche 32.2 hinausragt.

Außerdem umfasst jeder Klemmanschluss einen an dem unteren Ende der Öffnung 36 als Anschlagsfläche für die Federklemme 38 angeordneten Abnehmer 42.

Jeder Abnehmer 42 steht mit einem der Anschlusskontakte 34 in elektrischer Wirkverbindung, wobei jeder Anschlusskontakt 34 in einer Richtung senkrecht zu der zweiten Seitenfläche 32.2 des Grundkörpers eine Elastizität aufweist.

Ohne äußere Krafteinwirkung ragt jeder Anschlusskontakt 34 um einen Abstand A1 über die zweite Seitenfläche 32.2 hinaus, wobei sich jeweils an dem entferntesten Ende, also im Abstand A1 zu der zweiten Seitenfläche 32.2 des Grundkörpers 32 eine Kontaktfläche 44 befindet.

Durch die Elastizität der Anschlusskontakte 34 kann die jeweilige Kontaktfläche 44 wiederholt durch Krafteinwirkung in Richtung der zweiten Seitenfläche 32.2 bewegt werden.

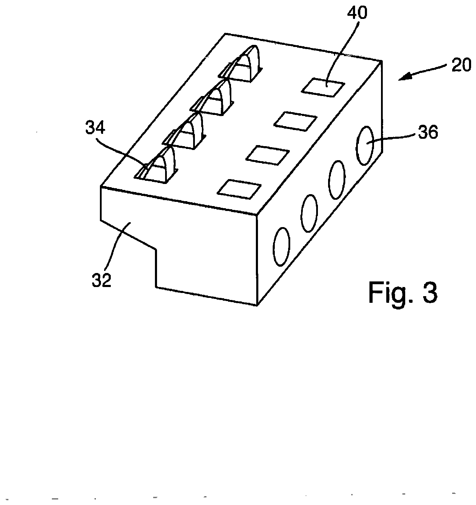

In der Abbildung der Figur 3 ist eine weitere Ausführungsform des Klemmanschlussblocks 20 perspektivisch dargestellt. Im Folgenden werden nur die Unterschiede zu der Figur 2 erläutert.

Der Grundkörper 32 des Klemmanschlussblocks 20 weist als Justagehilfe eine falzartige Stufe auf.

Der Klemmanschlussblock 20 weist wenigstens eine Kontaktfläche und den in elektrischer Wirkverbindung stehende Anschlusskontakt 34 auf, wobei der Anschlusskontakt 34 an dem Klemmraumoberteil angeordnet ist.

## Patentansprüche

1. Sensorgehäuse (10), umfassend ein Kopfteil (12) mit einem Sensorraum (14) zur Aufnahme eines Sensors, ein an das Kopfteil (12) angrenzendes Anschlussteil (16) mit einem Klemmraum (18) und einem in dem Klemmraum (18) angeordneten Klemmanschlussblock (20), wobei
- das Kopfteil (12) in einer an das Anschlussteil (16) angrenzenden Rückwand eine Durchgangsöffnung (24) zur Durchführung elektrischer Verbindungen, z.B. Kabel oder Stifte in den Sensorraum (14) aufweist,
- das Anschlussteil (16) mittels eines Verbindungsmittels (22) mit dem Kopfteil (12) verbunden ist,
- das Anschlussteil (16) eine an die Rückwand des Kopfteils (12) angrenzende erste Seitenwand mit einer mit der Durchgangsöffnung (24) des Kopfteils (12) zumindest überlappenden Durchgangsöffnung zur Durchgangsöffnung (24) zur Durchführung elektrischer Verbindungen, z.B. Kabel oder Stifte von dem Sensorraum (14) in den Klemmraum (18) aufweist und
- das Anschlussteil (16) eine zweite Seitenwand mit einer Eingangsöffnung (30) zur Kabeldurchführung in den Klemmraum (18) aufweist,
**dadurch gekennzeichnet, dass**
- der Klemmanschlussblock (20) einen aus einem elektrisch isolierenden Material bestehenden Grundkörper (32) mit mehreren Seitenflächen aufweist,
- der Grundkörper (32) eine erste Seitenfläche (32.1) mit mindestens zwei zueinander beabstandeten Klemmanschlüssen aufweist,
- beide Klemmanschlüsse jeweils eine in den Grundkörper (32) hineinreichende Öffnung (36) zur Aufnahme eines Endes einer elektrischen Leitung, eine Federklemme (38) und einen Abnehmer (42) für die Federklemme (38) aufweist,
- der Klemmanschlussblock (20) wenigstens zwei Anschlusskontakte (34) aufweist und jeder der beiden Anschlusskontakte (34) jeweils mit einem der Abnehmer (42) in einer elektrischer Wirkverbindung steht,
- die Anschlusskontakte (34) entlang einer zweiten Seitenfläche (32.2) des Grundkörpers (32) zueinander beabstandet sind,
- jeder der wenigstens beiden Anschlusskontakte (34) in dem ersten Abstand (A1) oberhalb der zweiten Seitenfläche (32.2) eine Kontaktfläche (44) aus einem elektrisch leitfähigen Material aufweist, wobei der erste Abstand (A1) der Kontaktfläche (44) durch elastische Verformung der Federklemme (38) verringerbar ist.

2. Sensorgehäuse (10) nach Anspruch 1, **dadurch gekennzeichnet, dass** die Öffnungen (36) der Klemmanschlüsse jeweils in Richtung der Eingangsöffnung (30) In der zweiten Seitenwand des Anschlussteils (16) ausgerichtet sind.

3. Sensorgehäuse (10) nach Anspruch 1 oder 2, **dadurch gekennzeichnet**, die Anschlusskontakte als Federkontakt ausgebildet ist und jeweils um einen ersten Abstand (A1) über die zweite Seitenfläche aus dem Grundkörper (32) hinausragend angeordnet sind

4. Sensorgehäuse (10) nach einem der vorangegangenen Ansprüche, **dadurch gekennzeichnet, dass** die Öffnung (36) jedes Klemmanschlusses zu der Eingangsöffnung (30) in der zweiten Seitenwand des Anschlussteils (16) einen Abstand aufweist, wobei jeder Abstand von einem aus allen Abständen gebildeten Mittelwert um höchstens 20% des Mittelwerts oder um höchstens 10% des Mittelwerts abweicht.

5. Sensorgehäuse (10) nach einem der vorangegangenen Ansprüche, **dadurch gekennzeichnet, dass** das Sensorgehäuse (10) eine in dem Klemmraum--(18) angeordnete Haltevorrichtung zur Aufnahme des - Klemmanschlussblocks (20) aufweist.

6. Sensorgehäuse (10) nach einem der vorangegangenen Ansprüche, **dadurch gekennzeichnet, dass** die zweite Seitenfläche (32.2) des Grundkörpers (32) plan ausgebildet ist.

7. Sensorgehäuse (10) nach einem der vorangegangenen Ansprüche, **dadurch gekennzeichnet, dass** das Anschlussteil (16) ein Klemmraumunterteil und einen Klemmraumdeckel umfasst, wobei das Klemmraumunterteil (16) und der Klemmraumdeckel (18) in einer Schließrichtung zusammengesetzt sind, das Klemmraumunterteil die zweite Seitenwand mit der Eingangsöffnung (30) umfasst, der Klemmraumdeckel die erste Seitenwand mit der Durchgangsöffnung umfasst und mittels des Verbindungsmittels (22) mit dem Kopfteil (12) verbunden ist und der Klemmanschlussblock (20) in dem Klemmraumunterteil angeordnet ist.

8. Sensorgehäuse (10) nach einem der vorangegangenen Ansprüche, **dadurch gekennzeichnet, dass** das Sensorgehäuse (10) dem IP 68 Standard oder dem IP 69K Standard entspricht.

9. Sensorgehäuse (10) nach einem der vorangegangenen Ansprüche, **dadurch gekennzeichnet, dass** der Klemmanschluss ein Betätigungsmittel (40) für die Federklemme (38) aufweist.

10. Induktiver Näherungssensor, **dadurch gekennzeichnet, dass** der Näherungssensor ein Sensorgehäuse (10) gemäß einem der vorangegangenen Ansprüche aufweist.

## Claims

1. Sensor housing (10) comprising a head part (12) with a sensor chamber (14) for reception of a sensor, a connection part (16), which adjoins the head part (12), with a terminal chamber (18) and a terminal connection block (20) arranged in the terminal chamber (18), wherein
- the head part (12) has in a back wall adjoining the connection part (16) a passage opening (24) for the passage of electrical connections, for example cables or pins, to the sensor chamber (14),
- the connection part (16) is connected with the head part (12) by way of connecting means (22),
- the connection part (16) has a first side wall, which adjoins the back wall of the head part (12), with a passage opening, which at least overlaps the passage opening (24) of the head part (12), to the passage opening (24) for the passage of electrical connections, for example cables or pins, from the sensor chamber (14) to the terminal chamber (18) and
- the connection part (16) has a second side wall with an entry opening (30) for cable passage into the terminal chamber (18),
**characterised in that**
- the terminal connection block (30) comprises a base body (32), which consists of an electrically insulating material, with a plurality of side surfaces,
- the base body (32) has a first side surface (32.1) with at least two mutually spaced terminal connections,
- the two terminal connections each have an opening (36) extending into the base body (32) and for reception of an end of an electrical line, a spring terminal (38) and a take-off (42) for the spring terminal,
- the terminal connection block (20) has at least two connection contacts (34) and each of the two connection contacts (34) is electrically operatively connected with a respective one of the take-offs (42),
- the connection contacts (34) are spaced from one another along a second side surface (32.2) of the base body (32),
- each of the at least two connection contacts (34) has a contact surface (44) of an electrically conductive material at the first distance (A1) above the second side surface (32.2), wherein the first distance (A1) of the contact surface (44) is reducible by resilient deformation of the spring terminal (38).

2. Sensor housing (10) according to claim 1, **characterised in that** the openings (36) of the terminal connections are each oriented in the direction of the entry opening (30) in the second side wall of the connection part (16).

3. Sensor housing (10) according to claim 1 or 2, **characterised in that** the connection contacts are each constructed as a spring contact and are each arranged to project from the base body (32) by a first distance (A1) above the second side surface.

4. Sensor housing (10) according to any one of the preceding claims, **characterised in that** the opening (36) of each terminal connection has a spacing from the entry opening (30) in the second side wall of the connection part (16), wherein each spacing differs from a mean value, which is formed from all spacings, by at most 20% of the mean value or at most 10% of the mean value.

5. Sensor housing (10) according to any one of the preceding claims, **characterised in that** the sensor housing (10) has a holding device, which is arranged in the terminal chamber (18), for reception of the terminal connection block (20).

6. Sensor housing (10) according to any one of the preceding claims, **characterised in that** the second side surface (32.2) of the base body (32) is formed to be planar.

7. Sensor housing (10) according to any one of the preceding claims, **characterised in that** the connection part (16) comprises a terminal chamber lower part and a terminal chamber cover, wherein the terminal chamber lower part (16) and the terminal chamber cover (18) are assembled in a closing direction, the terminal chamber lower part has the second side wall with the entry opening (30), the terminal chamber cover has the first side wall with the passage opening and is connected with the head part (12) by way of the connecting means (22) and the terminal connection block (20) is arranged in the terminal chamber lower part.

8. Sensor housing (10) according to any one of the preceding claims, **characterised in that** the sensor housing (10) corresponds with the IP 68 Standard or the IP 69K Standard.

9. Sensor housing (10) according to any one of the preceding claims, **characterised in that** the terminal connection comprises actuating means (40) for the spring terminal (38).

10. Inductive proximity sensor, **characterised in that** the proximity sensor comprises a sensor housing (10) according to any one of the preceding claims.

## Revendications

1. Boîtier de capteur (10) comprenant un élément de tête (12) avec un espace de senseur (14) destiné à recevoir un senseur, un élément de connexion (16) avec un bornier (18) contigu à l'élément de tête (12) et un bloc de connecteurs à borne (20) disposé dans le bornier, dans laquelle
- l'élément de tête (12) présente, dans une paroi arrière contigüe à l'élément de connexion (16), une ouverture de passage (24) pour le passage de liaisons électriques, p. ex. de câbles ou de broches dans l'espace de senseur (14),
- l'élément de connexion (16) est relié au moyen d'un moyen de liaison (22) avec l'élément de tête (12),
- l'élément de connexion (16) présente une première paroi latérale contigüe à la paroi arrière de l'élément de tête (12) avec une ouverture de passage se chevauchant au moins avec l'ouverture de passage (24) de l'élément de tête (12) pour le passage de liaisons électriques, p. ex. de câbles ou de broches de l'espace de senseur (14) au bornier (18),
- l'élément de connexion (16) présente une deuxième paroi latérale avec une ouverture d'entrée (30) pour le passage de câbles dans le bornier (18),
**caractérisée en ce que**
- le bloc de connecteurs à borne (20) présente un corps de base (32) avec plusieurs faces latérales constitué d'un matériau isolant électriquement,
- le corps de base (32) présente une première face latérale (32.1) avec au moins deux connecteurs à borne espacés l'un de l'autre,
- les deux connecteurs à borne présentent chacun une ouverture (36) pénétrant dans le corps de base (32) pour recevoir une extrémité d'un fil électrique, une borne à ressort (38) et un réceptacle (42) pour la borne à ressort (38),
- le bloc de connecteurs à borne (20) présente au moins deux contacts de connexion (34) et chacun des deux contacts de connexion (34) est en liaison électrique active avec un des réceptacles (42),
- les contacts de connexion (34) sont espacés entre eux le long d'une deuxième face latérale (32.2) du corps de base (32), et
- chacun des au moins deux contacts de connexion (34) présente à la première distance (A1) au-dessus de la deuxième face latérale (32.2) une surface de contact (44) faite d'un matériau conducteur électriquement, la première distance (A1) de la surface de contact (44) pouvant être réduite par une déformation élastique de la borne à ressort (38).

2. Boîtier de capteur (10) selon la revendication 1, **caractérisée en ce que** les ouvertures (36) des connecteurs à borne sont orientées chacune dans la direction de l'ouverture d'entrée (30) dans la deuxième paroi latérale de l'élément de connexion (16).

3. Boîtier de capteur (10) selon la revendication 1 ou 2, **caractérisée en ce que** les contacts de connexion sont configurés comme des contacts à ressort et saillent chacun du corps de base (32) à une première distance (A1) au-dessus de la deuxième face latérale.

4. Boîtier de capteur (10) selon une des revendications précédentes, **caractérisée en ce que** l'ouverture (36) de chaque connecteur à borne présente une distance par rapport à l'ouverture d'entrée (30) dans la deuxième paroi latérale de l'élément de connexion (16), chaque distance variant de 20% maximum ou de 10% maximum de la valeur moyenne de toutes les distances.

5. Boîtier de capteur (10) selon une des revendications précédentes, **caractérisée en ce que** ce boîtier de capteur (10) comporte un dispositif de maintien disposé dans le bornier (18) pour recevoir le bloc de connecteurs à borne (20).

6. Boîtier de capteur (10) selon une des revendications précédentes, **caractérisée en ce que** la deuxième face latérale (32.2) du corps de base (32) est plane.

7. Boîtier de capteur (10) selon une des revendications précédentes, **caractérisée en ce que** l'élément de connexion (16) comprend un socle de bornier et un couvercle de bornier, le socle de bornier et le couvercle de bornier étant assemblés dans une direction de fermeture, le socle de bornier comprenant la deuxième paroi latérale avec l'ouverture d'entrée (30), le couvercle de bornier comprenant la première paroi latérale avec l'ouverture de passage et étant relié au moyen du moyen de liaison (22) avec l'élément de tête (12) et le bloc de connecteurs à borne (20) étant disposé dans le socle de bornier.

8. Boîtier de capteur (10) selon une des revendications précédentes, **caractérisée en ce que** ce boîtier de capteur (10) répond à la norme IP 68 ou à la norme IP 69K.

9. Boîtier de capteur (10) selon une des revendications précédentes, **caractérisée en ce que** le connecteur à borne présente un moyen d'actionnement (40) pour la borne à ressort (38).

10. Capteur de proximité inductif, **caractérisé en ce que** ce capteur de proximité comporte un boîtier de capteur (10) selon une des revendications précédentes.
